Europäisches Patentamt

European Patent Office

Office européen des brevets

(11) Publication number: **0 130 763**
**A1**

## EUROPEAN PATENT APPLICATION

(21) Application number: **84304270.6**

(22) Date of filing: **25.06.84**

(51) Int. Cl.⁴: **F 16 H 25/06**

(30) Priority: **29.06.83 US 508739**

(43) Date of publication of application: **09.01.85**
**Bulletin 85/2**

(84) Designated Contracting States: **BE CH DE FR GB IT LI
NL SE**

(71) Applicant: **USM Corporation, 426 Colt Highway,
Farmington Connecticut 06032 (US)**

(72) Inventor: **Farley, Wilbur Henry, 58 Standley Street,
Beverly, Mass. 01915 (US)**

(74) Representative: **Spencer, Hubert John et al, PO Box
No. 88 Belgrave Road, Leicester LE4 5BX (GB)**

(54) **Diaphragm protection arrangement for harmonic drive mechanisms.**

(57) A strain wave type of transmission mechanism having a wave generator 20 mounted on a shaft 18 journalled in a housing 12 in registration with a flexspline 22 and a circular spline 26. The flexspline 22 has a diaphragm 36 at its closed end, attached to a second shaft 40 journalled in the housing. The second shaft 40 has support means 50 arranged on each side of the diaphragm 36 and parallel therewith. The support means 50 comprises a pair of annular rims 52, 54 spaced from each side of the diaphragm 36, and are at least 90 to 95% the diameter of the bore of the flexspline 22. The annular rims 52, 54 are spaced about .002 to about .004 inches from their respective side of the diaphragm for every inch diameter of the bore of the flexspline. The annular rims 52, 54 provide «back-up» support for the diaphragm during assembly, operation and disassembly of the unit.

EP 0 130 763 A1

ACTORUM AG

1.

Diaphragm Protection Arrangement
For Harmonic Drive Mechanisms
Background of the Invention
(1) Field of the Invention

This invention relates to strain wave gearing assemblies, and more particularly to means for resisting damaging deformation in diaphragms of flexsplines in Harmonic Drive transmissions.

(2) Prior Art

This invention is concerned with rotary power transmission, the basic concepts of which were disclosed in U.S. patent No. 2906143 to Musser, wherein a Harmonic Drive actuator is shown to customarily employ three basic elements: a flexspline, a rigid circular spline coaxial therewith, and a wave-generator means for effecting deflection of the flexspline and meshing of the spline members at spaced localities, and for causing a wave of deflection to be generated in the flexspline. Any one of these members may serve as the input, and one of the other two may serve as an output member.

The flexspline is generally formed from a tubular flexible member with external teeth located near one of the ends, and a diaphragm extending radially inwardly, across the other end of the tubular member. The diaphragm performs two functions. It attenuates the axial excursion of the tubular member where it is restricted into a circular shape by the diaphragm and it provides a means to attach the flexspline to a structurally rigid member which can be a rotary input/output or held stationary. As presently used in strain wave gearing devices (Harmonic Drive transmissions), flexsplines are designed with consideration being given to the operating stresses. These operating stresses include the radial deflection stress in the tubular portion of the flexspline and the axial deflection stress in the diaphragm. The axial stress is caused by the diaphragm end of the tubular member not remaining in place, but scalloping when the tooth end of the tubular member is deflected from a round condition to an ellipsoidal shape.

As the ellipsodial shape is rotated, the scalloping pattern imposed in the diaphragm by the tubular portion of the flexspline also rotates, the maximum excursion being between the major and the minor axis. To minimize the axial flexing stress in the diaphragm in the prior art, its thickness was held to a minimum, but was maintained thick enough to transmit peak output torque that the flexspline was designed to handle.

Some flexsplines have failed at the diaphragm end during operation, in the region between the mounting portion and the flexing portion. It has been realized that the assembler or disassembler of the system has inadvertently applied excessive axial force to insert or remove the ellipsoidal wave generator from the tubular portion of the flexspline. Since any axial force is reacted in the flexspline diaphragm, any excessive axial force that is applied during assembly will cause the diaphragm to dish, with resultant residual stresses retained in the diaphragm to cause it to fail during subsequent operation.

In the design of flexspline assemblies, particularly those whose overall dimensions are small (under four inches in diameter, and closer to two inches) compared to standard size Harmonic Drive transmissions, maximizing thickness of the diaphragm to minimize failure thereof may not be possible due to design constraints. Safeguards must be utilized to protect the diaphragm during assembly, to minimize the dishing and undesirable yielding which may otherwise occur therein.

It is thus an object of the present invention, to overcome the disadvantages of the prior art.

It is also an object of the present invention, to provide a diaphragm arrangement for miniaturized Harmonic Drive transmissions, which are about one half or less the size of regular units which will eliminate their failure during use, the cause of which failure occurring during assembly.

The present invention includes a strain wave gearing transmission where minimization of dimensions and maximization of reliability are of paramount importance.

Standard strain wave gearing assemblies comprise a rigid circular spline, a flexspline coaxial therewith, and a wave generating means for effecting the deflection of the flexspline into advancing intermeshing engagement with the circular spline. The flexspline has a diaphragm disposed across the end opposite the spline end. The diaphragm is preferably bolted to an output shaft which is journalled through the housing. The current invention includes this type of assembly, but it also includes support means for the flexspline diaphragm, on both sides thereof.

The support means for the diaphragm comprises an annular ring spaced therefrom, and on each side secured to or manufactured as part of the shaft to which the diaphragm is attached. Each annular ring extends radially outwardly to at least about 90% of the bore diameter of the flexspline itself. Thus, positive limits of axial deflection of the diaphragm, caused by axial translation of the flexspline during wave induced deformation therein, or by assembly or disassembly of components, is maintainable.

The limits of the deflection of the diaphragm, and thus the distance separating the spaced apart support means from each side of the diaphragm, range from about .002 to about .004 inches per inch of diameter of the bore of the flexspline. If for example, a flexspline has a bore diameter of 1 inch, then each support would be axially spaced about .002 to about .004 of an inch therefrom, and would be themselves, about .90 inches in diameter. The support members are preferably manufactured from a rigid material such as steel or aluminum to withstand the axial forces to which they are subjected.

In an alternative embodiment, the annular ring on the "outer" side of the diaphragm may be of a diameter larger than the bore of the flexspline, ranging to a diameter of about 110% of the bore of the flexspline. This upper range would provide extra support at circumference of the flexspline, providing direct axial resistance to translation thereof, avoiding any stress in the diaphragm during assembly, other than that allowed by the space between the annular rings and the diaphragm.

Brief Description of the Drawing

The objects and advantages of the present invention will become more apparent when viewed in conjunction with the following drawing, in which:

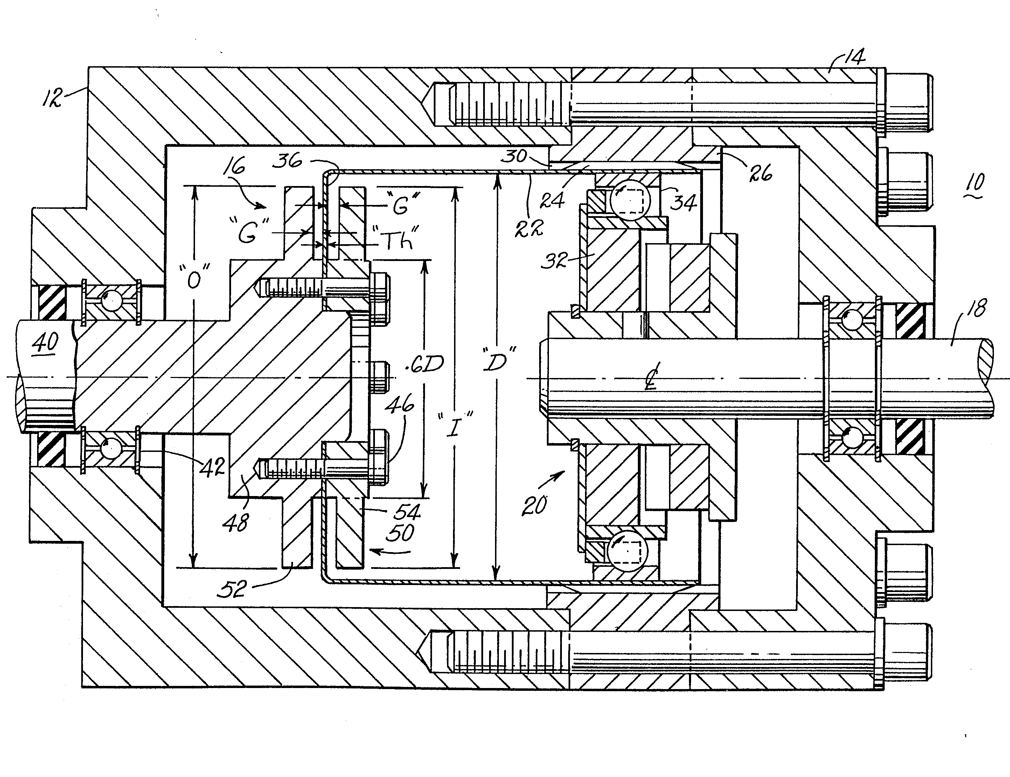

Figure 1 is a sectional view of a strain wave gearing assembly, constructed according to the principles of the present invention.

Description of the Preferred Embodiment

Referring now to the drawing in detail, there is shown a strain wave gearing (Harmonic Drive) transmission 10, in a greatly enlarged view, having a housing 12 and an end cap 14 which encloses a strain wave gearing assembly 16. The assembly 16 comprises a first shaft 18, which for descriptive purposes here, may be an input shaft, a wave generator assembly 20 disposed on the inner end of the first shaft 18, a cup-shaped flexspline 22, having a bore of diameter "D", the flexspline 22 being open at its right hand end as shown in the drawing, and around which end there is arranged a circumferential array of gear teeth 24. A circular spline 26 is fixedly disposed to the housing 12 and end cap 14, having a circumferential array of inwardly directed gear teeth 30, theredisposed, in a manner similar to that shown in U.S. Patents 3020775 or 2906143 incorporated herein by reference. The wave generator assembly 20 preferably comprises an elliptically shaped wave generator plug 32 secured to the first shaft 18. A resilient bearing 34 pressed onto the outer periphery of the wave generator plug 32, is disposed in radial contact with the inner side of the flexspline 22 adjacent its open end, as shown in the figure. The outer end of the flexspline 22 comprises a diaphragm 36, made from a metallic material, in a thickness "TH" ranging from about .010 inches to about .020 inches in view of the size of the flexspline, which may be 2 inches or less in diameter. The diaphragm 36 (and thus the flexspline 22) are secured by a bolt arrangement 46 to an abutting member 48 comprising the inner end of a second shaft 40, journalled in a bearing arrangement 42 through the housing 12.

A diaphragm support means 50 is arranged on the proximal end of the second shaft 40, on both sides of the diaphragm 36 as shown in the figure. The diaphragm support means 50 comprises an annular rim 52 disposed on the outer side of the diaphragm 36, parallel thereto and spaced a designated distance "G" therefrom. The diaphragm support means 50 also comprises an inner annular rim 54 secured to the innermost end of the shaft 40 by the bolt arrangement 46, or the like, and on the innermost side of the diaphragm 36 parallel thereto and also spaced a designated distance "G" therefrom. The diameter "I" and "O" of the inner and outer annular rims 52 and 54 are preferably about at least 90 to 95% of the diameter "D" of the bore of the flexspline 22 and are each relatively thick, compared to the flexspline 22.

The designated distance "G" separating each annular rim 52 and 54 from its side of the diaphragm 36 may range from between about .002 to about .004 inches per inch of diameter of the bore D of the flexspline 22. If the diameter "D" of the flexspline 22 were 1 inch in diameter then each face of rim 52 and 54 could be from .002 inches to about .004 inches from their respective sides of the diaphragm 36.

When the wave generating assembly 20 is pushed into and mated with the flexspline 22, the diaphragm 36 will be limited in the amount of "dishing" that will be permitted inasmuch as it would be supported by the outer annular rim 52 "backing it up". During rotary motion and deflection of the flexspline 22, the axial translation of the flexspline 22 and scalloping between it and the diaphragm 36 will thus be limited by the faces on the parallel annular rims 52 and 54.

The diameter of the abutting member 48 (the inner end of the second shaft 40 which prevents any flexure of the diaphragm 36 thereat) is 60% of the diameter "D" of the bore of the flexspline 22.

An alternative embodiment comprises the diameter "O" of the outer annular rim 52 being about 110% of the diameter "D" of the flexspline bore. This would permit circumferential support against excess axial movement for the flexspline 22 itself, and not just support the diaphragm 36.

Thus there has been shown a novel arrangement for increasing the life cycle of diaphragms of Harmonic Drive mechanisms, particularly those of small dimensions, those with flexspline bore diameters under about four inches, wherein the diaphragms have to, of necessity, be thin to permit the flexspline to deflect, and to allow a certain amount of scalloping to occur.

Claims:

1. A strain wave gearing assembly for transmitting rotary motion including:

a housing (12) for enclosing said strain wave gearing assembly (16);

a first and a second shaft (18, 40) journalled into said housing;

a wave generator arrangement (20) secured onto the inner end of said first shaft (18);

a flexspline (22) of generally cylindrical configuration having one end disposed radially adjacent said wave generator arrangement, and also radially adjacent a circular spline arrangement; said flexspline having a diaphragm (36) across its other end, said diaphragm (36) being secured to the inner end of said second shaft, the improvement characterized by a support means (50) arranged on said second shaft to provide support to said diaphragm thereon.

2. A strain wave gearing assembly as recited in claim 1, wherein said support means (50) comprises at least one annular rim (52 or 54) attached to said second shaft (40).

3. A strain wave gearing assembly, as recited in claim 2, wherein said support means (50) also comprises a second annular rim (54 or 52) attached to said second shaft (40).

4. A strain wave gearing assembly, as recited in claim 2, wherein said annular rim (52, 54) has a diameter of at least 90% of the diameter of the bore of the flexspline (22).

5. A strain wave gearing assembly, as recited in claim 2, wherein said annular rim (52, 54) is spacedly arranged parallel to said diaphragm (36).

6. A strain wave gearing assembly, as recited in claim 2, wherein said annular rim (52, 54) is spaced about .002 to about .004 inches from said diaphragm (36) for every inch of diameter of the bore of said flexspline (22).

7. A strain wave gearing assembly, as recited in claim 3, wherein said diaphragm (36) has a thickness of about 0.010 to 0.020 inches.

8. A strain wave gearing assembly, as recited in claim 3, wherein the outermost annular rim (52) has a diameter greater than the diameter of the bore of said flexspline (22).

European Patent
Office

**EUROPEAN SEARCH REPORT**

Application number

| | DOCUMENTS CONSIDERED TO BE RELEVANT | | EP 84304270.6 |
|---|---|---|---|

| Category | Citation of document with indication, where appropriate, of relevant passages | Relevant to claim | CLASSIFICATION OF THE APPLICATION (Int. Cl. ³) |
|---|---|---|---|
| X | <u>US - A - 2 932 986</u> (MUSSER)<br>* Fig. 13 *<br>-- | 1-5,8 | F 16 H 25/06 |
| A | <u>DE - A1 - 3 037 758</u> (USM-CORP.)<br>* Totality *<br>-- | | |
| A | <u>US - A - 3 555 929</u> (HOSSFELD)<br>* Totality *<br>---- | | |

|  |  |  | TECHNICAL FIELDS SEARCHED (Int. Cl. ³) |
|---|---|---|---|
|  |  |  | F 16 H 1/00<br>F 16 H 13/00<br>F 16 H 25/00 |

The present search report has been drawn up for all claims

| Place of search | Date of completion of the search | Examiner |
|---|---|---|
| VIENNA | 24-09-1984 | SCHATEK |